# EUROPEAN PATENT APPLICATION

(11) **EP 4 733 103 A1**
(43) Date of publication of application: **29.04.2026**
(21) Application number: 25741460.7
(22) Date of filing: 13.01.2025
(51) Int. Cl.: B60K 1/02, B60K 17/16, B60K 17/08

(54) **ELECTRIC DRIVE AXLE AND ELECTRIC TRUCK**

(30) Priority: 15.01.2024 CN 202410050737
(71) Applicant: Fujian Super Panther Power Technology Co., Ltd., Xiamen, Fujian 361021 (CN)
(72) Inventor: MA, Ji, Xiamen, Fujian 361021 (CN); TAO, Zhaofeng, Xiamen, Fujian 361021 (CN); SHEN, Zhenhua, Xiamen, Fujian 361021 (CN); YANG, Xuewei, Xiamen, Fujian 361021 (CN); XU, Peng, Xiamen, Fujian 361021 (CN); WANG, Chao, Xiamen, Fujian 361021 (CN); CAO, Yi, Xiamen, Fujian 361021 (CN); LIU, Chao, Xiamen, Fujian 361021 (CN)
(74) Representative: Gulde & Partner
(86) International application number: PCT/CN2025/072070
(87) International publication number: WO 2025/152899

(57) **Abstract**

The present invention relates to an electric drive axle and an electric truck. The electric drive axle is provided with a main drive electric motor, an auxiliary drive electric motor, a speed reducer assembly and a differential assembly, wherein the speed reducer assembly is provided with a main drive first speed reduction stage, an auxiliary drive first speed reduction stage, a first-gear transmission mechanism, a second-gear transmission mechanism and a gear shifting mechanism, wherein the gear shifting mechanism enables switching between a first gear, a second gear and a neutral gear; the main drive electric motor transmits power to the differential assembly via the main drive first speed reduction stage by means of the first-gear transmission mechanism or the second-gear transmission mechanism; the speed reducer assembly is further provided with an auxiliary drive power disengagement device; and the auxiliary drive electric motor can transmit power to the first-gear transmission mechanism via the auxiliary drive first speed reduction stage by means of coupling of the auxiliary drive power disengagement device, and avoids passive idling by means of disconnection of the auxiliary drive power disengagement device. The electric truck provided by the present invention has the electric drive axle.

## Description

This application claims the priority of the Chinese Patent Application No. 202410050737.8 filed on January 15, 2024, and the entire content disclosed in the aforementioned Chinese Patent Application is incorporated herein by reference as part of this application.

### TECHNICAL FIELD

The present invention relates to an electric drive axle and an electric truck.

### BACKGROUND

For the electric drive axle of electric truck, such as those used in medium and heavy-duty trucks, the current market generally adopts two main drive modes: single-motor drive and dual-motor drive. In the case of a single-motor drive, at high speeds, due to the limited power of the single motor, the acceleration and climbing capabilities are poor, which greatly reduces the transportation efficiency of electric heavy-duty trucks. In the case of a dual-motor drive, when the vehicle is under a light load, the dual motors cannot operate in the economic operating range, resulting in increased power consumption, poor overall vehicle economy, reduced driving range, and higher operating costs of the electric truck. Therefore, the aforementioned single-motor or dual-motor the electric drive axle are not conducive to market promotion.

In addition, in the electric drive axle equipped with a differential, the differential occupies a relatively large space, leaving more limited space for the reducer and motor. Thus, a reducer with better space utilization is required. A large number of electric drive axle designs for passenger cars are known in this regard, but the electric drive axle of passenger cars are significantly different from those of electric truck in many aspects. For example, the chassis of electric truck is provided with balanced suspension, leaf springs, etc. Therefore, the electric drive axle of passenger cars basically cannot be directly adapted for use in electric truck.

Regarding the electric drive axle of electric truck, various types of reducers are known, but many reducers only remain in the principle design stage and often fail to consider the size and efficiency of gears in actual reduction stages, making it difficult to put them into practice.

Furthermore, in the electric drive axle with a differential, the design of the electric drive axle also needs to consider the design of transmission stages. Specifically, the transmission stage from the motor to the differential (such as the design of spur gear transmission or planetary gear transmission) and the transmission stage from the differential to the wheels (such as the design of planetary gear transmission) require an overall design. Moreover, the design of the transmission stages also needs to be associated with the design of the motor, so as to enable the motor to operate in the high-efficiency operating range as much as possible while ensuring high transmission efficiency.

In addition, the weight of the electric drive axle is also an important factor to consider. Therefore, the number of parts should be minimized while meeting the requirements of power performance and energy saving. For dual-motor the electric drive axle, there is currently no ideal solution that balances power performance, economy, and space utilization.

### SUMMARY

Based on the aforementioned prior art, the technical problem to be solved by the present invention is to largely overcome the defects of the prior art and provide an electric drive axle with high practical application value.

The electric drive axle according to the present invention is used for electric truck and comprises a main drive motor, an auxiliary drive motor, a reducer assembly and a differential assembly. The reducer assembly includes a main drive primary reduction stage, an auxiliary drive primary reduction stage, a first-gear transmission mechanism, a second-gear transmission mechanism and a shifting mechanism, wherein the shifting mechanism enables switching between first-gear position, second-gear position and neutral-gear position. The main drive motor transmits power to the differential assembly via the main drive primary reduction stage and through either the first-gear transmission mechanism or the second-gear transmission mechanism. The reducer assembly further includes an auxiliary drive disengagement device, and the auxiliary drive motor can transmit power to the first-gear transmission mechanism via the auxiliary drive primary reduction stage and through the engagement of the auxiliary drive disengagement device, while avoiding passive idling through the disengagement of the auxiliary drive disengagement device.

Herein, the transmission design of the main drive motor ensures that the motor operates in the economic operating range (i.e., high-efficiency operating range) under low-speed working conditions of a vehicle, while achieving good climbing performance. The transmission design of the auxiliary drive motor meets the vehicle's acceleration and climbing needs under high-speed working conditions. The adoption of the auxiliary drive disengagement device enables the disengagement of the auxiliary drive motor under light load, realizing energy-saving requirements and avoiding energy loss caused by passive idling of the motor. In addition, through the engagement of the auxiliary drive disengagement device, the vehicle can also operate with only the auxiliary drive motor. Furthermore, the design of the reducer assembly realizes multiple drive modes. Within the scope of the present invention, the high-efficiency operating range of the motor refers to a motor efficiency range of 90% to 97%. In the overall scheme, the present invention has achieved an ideal solution balancing power performance, economy and space utilization, and further prominent beneficial technical effects will be achieved in preferred embodiments.

In a preferred embodiment of the present invention, the auxiliary drive motor can transmit power only to the first-gear transmission mechanism via the auxiliary drive primary reduction stage and through the engagement of the auxiliary drive disengagement device. This means that the auxiliary drive motor will not directly transmit power to the second-gear transmission mechanism via the auxiliary drive primary reduction stage. Thus, the power of the auxiliary drive motor can be completely disconnected through the auxiliary drive disengagement device.

In a preferred embodiment of the present invention, the main drive primary reduction stage includes a first gear and a second gear that mesh with each other, the first gear is connected to the main drive motor, and the second gear is fixed on the first shaft. The auxiliary drive primary reduction stage includes a third gear and a fourth gear that mesh with each other, the third gear is connected to the auxiliary drive motor, and the fourth gear is rotatably supported on the second shaft. In addition, the first-gear transmission mechanism includes a first-gear driving gear and a first-gear driven gear, and the second-gear transmission mechanism includes a second-gear driving gear and a second-gear driven gear. The first-gear driving gear and the second-gear driving gear are fixed on the first shaft, and the first-gear driven gear and the second-gear driven gear are rotatably supported on the output shaft of the transmission assembly. Furthermore, the shifting mechanism includes an output shaft gear hub, a first-gear driven gear hub, a second-gear driven gear hub and a first sleeve. The first sleeve can be located only on the output shaft gear hub, or connect the first-gear driven gear hub to the output shaft gear hub, or connect the second-gear driven gear hub to the output shaft gear hub. Through the above design, the power transmission of the main drive motor is realized, ensuring the power performance of the electric truck under low-speed working conditions.

In a preferred embodiment of the present invention, the auxiliary drive disengagement device includes a fourth gear hub, a second shaft gear hub, a second shaft, a second sleeve and a fifth gear. The second shaft gear hub is fixed on the second shaft, and the second sleeve can connect or disconnect the fourth gear hub and the second shaft gear hub. The fifth gear is fixed on the second shaft and meshes with the first-gear driven gear. Herein, the fourth gear does not mesh with the second-gear driven gear. Through the arrangement of the auxiliary drive disengagement device according to the present invention, the disengagement of the auxiliary drive motor under light load is realized, thereby achieving energy-saving requirements; in addition, auxiliary power is provided under heavy load, and the power requirements under high-speed working conditions and low-speed climbing capacity can be met.

In a preferred embodiment of the present invention, the output shaft is directly connected to the differential assembly. Within the scope of the present invention, "direct connection" means that there is no reduction stage between them, in particular no planetary gear reducer between the output shaft and the differential assembly. Thus, the main drive motor and the auxiliary drive motor can transmit power to the differential assembly through only two reduction stages, which particularly improves transmission efficiency. In addition, this design also saves space and improves the space utilization of the reducer assembly.

In a preferred embodiment of the present invention, the differential assembly is connected to the left half-shaft and the right half-shaft of the electric truck, wherein the right half-shaft passes through the output shaft designed as a hollow shaft. The left half-shaft and the right half-shaft are directly connected to the corresponding wheels respectively, that is, no reduction stage is provided between the left half-shaft and the wheel, and no reduction stage is provided between the right half-shaft and the wheel. In this overall design, the wheel-side reducer is particularly omitted, reducing manufacturing costs and assembly costs.

In a preferred embodiment of the present invention, the second gear is axially arranged between the first-gear driving gear and the second-gear driving gear. In addition, the fourth gear is axially arranged between the first-gear driven gear and the second-gear driven gear. Furthermore, with reference to the radial direction of the axle, the auxiliary drive disengagement device is arranged between the shifting mechanism and the auxiliary drive motor. Through such a design, a more compact structure is realized. In a preferred embodiment of the present invention, with reference to the driving direction, the main drive motor is arranged on the front side of the electric drive axle and the auxiliary drive motor is arranged on the rear side of the electric drive axle. This design makes the overall outline conducive to adaptation with other structures.

In a preferred embodiment of the present invention, the main drive motor, the auxiliary drive motor, the reducer assembly and the differential assembly are arranged in a common housing. Thus, the electric drive axle is designed to be more compact and is particularly conducive to the design of the lubrication system, thereby lubricating the components inside the entire housing.

In a preferred embodiment of the present invention, the rated torque of the main drive motor is greater than 1000 Nm, and the rated torque of the auxiliary drive motor does not exceed the rated torque of the main drive motor. Herein, the rated torque of the auxiliary drive motor is selected to be 50% to 100% of the rated torque of the main drive motor, preferably 60% to 80%. By specifically selecting the rated torques of the main drive motor and the auxiliary drive motor, it can be particularly adapted to the reducer assembly designed according to the present invention, thereby ensuring that the main drive motor and the auxiliary drive motor operate in the high-efficiency operating range as much as possible, and ensuring high power transmission efficiency.

In a preferred embodiment of the present invention, the electric drive axle is provided with a controller for controlling the shifting mechanism and the auxiliary drive disengagement device. The controller is configured to implement the following drive modes: main drive motor low-gear drive mode, main drive motor and auxiliary drive motor low-gear drive mode, main drive motor high-gear drive mode, main drive motor and auxiliary drive motor high-gear drive mode, auxiliary drive motor low-gear drive mode, and auxiliary drive motor high-gear drive mode. Through the switching of various drive modes, it can particularly adapt to various working conditions, realize energy-saving requirements, and ensure power performance.

In a preferred embodiment of the present invention, in the auxiliary drive motor low-gear drive mode, the main drive motor outputs zero torque (e.g., shuts down) and the shifting mechanism engages first-gear position, and the auxiliary drive motor can transmit power to the first-gear transmission mechanism through the engagement of the auxiliary drive disengagement device, and then output power through the first-gear transmission mechanism. In the auxiliary drive motor high-gear drive mode, the main drive motor outputs zero torque and the shifting mechanism engages second-gear position, and the auxiliary drive motor can transmit power to the first-gear transmission mechanism through the engagement of the auxiliary drive disengagement device, and then transmit it to the second-gear transmission mechanism to output power. These two modes realize energy-saving requirements under light load or no-load, low-speed or high-speed conditions. In addition, in a preferred embodiment, the cruise speed of the electric truck when the auxiliary drive motor is used alone is between 20 and 50 km/h, and more preferably, the road gradient is less than 1%. Using the auxiliary drive motor alone under this working condition can be well adapted to the design of the electric drive axle of the present invention, thereby maintaining the motor efficiency in the high-efficiency operating range.

Another aspect of the present invention relates to an electric truck having the electric drive axle according to the present invention. The electric truck according to the present invention has at least two axles, preferably three axles. Advantageously, the the electric drive axle according to the present invention are the middle axle and the rear axle. The electric truck may be a medium-sized electric truck, in particular, a heavy-duty electric truck.

In summary, the electric drive axle according to the present invention simultaneously balances power performance, economy, and space utilization. Through various preferred embodiments of the present invention, the electric drive axle or electric truck according to the present invention can further reduce energy consumption and operating costs, thereby gaining greater advantages over fuel-powered vehicles and improving the future market penetration rate of electric truck.

### BRIEF DESCRIPTION OF THE DRAWINGS

The following describes the aforementioned features and advantages of the present invention as well as the ways to achieve them in detail with reference to specific embodiments and the accompanying drawings, but the present invention is not limited to the features of the specific embodiments. In the accompanying drawings:
Fig. 1 shows the electric drive axle according to the present invention.
Fig. 2 shows the main drive motor low-gear drive mode.
Fig. 3 shows the main drive motor and auxiliary drive motor low-gear drive mode.
Fig. 4 shows the main drive motor high-gear drive mode.
Fig. 5 shows the main drive motor and auxiliary drive motor high-gear drive mode.
Fig. 6 shows the auxiliary drive motor low-gear drive mode.
Fig. 7 shows the auxiliary drive motor high-gear drive mode.

### DETAILED DESCRIPTION

To make the objectives, technical solutions and advantages of the embodiments of the present invention clearer, the technical solutions of the embodiments of the present invention will be described clearly and completely below with reference to the accompanying drawings of the embodiments of the present invention. Obviously, the described embodiments are part of the embodiments of the present invention, rather than all the embodiments. Based on the described embodiments of the present invention, all other embodiments obtained by those of ordinary skill in the art without creative labor shall fall within the protection scope of the present invention.

Unless otherwise defined, the technical terms or scientific terms used herein shall have the ordinary meanings understood by those with general skills in the field to which the present invention belongs. The terms such as "first" and "second" used in the specification and claims of the present invention do not denote any order, quantity or importance, but are merely used to distinguish different components. Terms such as "include" or "comprise" mean that the element or item preceding the term covers the element or item listed after the term and their equivalents, but does not exclude other elements or items. Terms such as "front", "rear", "upper", "lower", "left" and "right" are only used to indicate relative positional relationships; when the absolute position of the described object changes, the relative positional relationship may also change accordingly.

The accompanying drawings in the present invention are not drawn strictly to actual scale, and are only regarded as provisions of the present invention when the dimensions and positional relationships are clearly stated, and the specific dimensions and quantities of each structure can be determined according to actual needs.

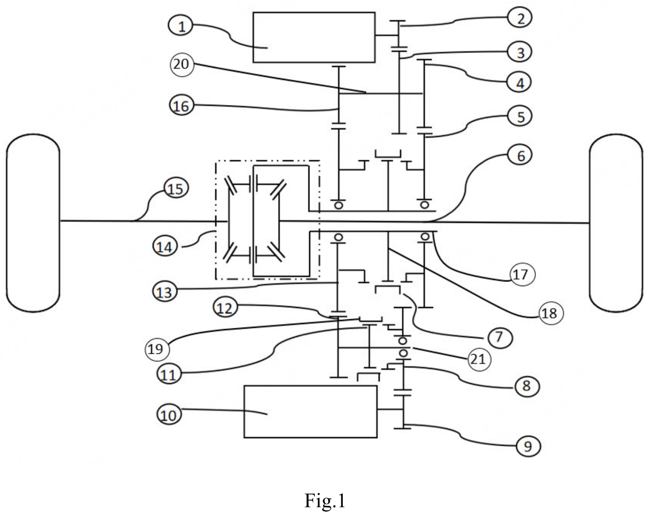

The present invention is generally described with reference to Fig. 1. The electric drive axle comprises: a main drive motor 1; a first gear 2 configured as the driving gear of the main drive primary reduction stage; a second gear 3 configured as the driven gear of the main drive primary reduction stage; a second-gear driving gear 4; a second-gear driven gear 5; a right half-shaft 6; a first sleeve 7; a third gear 9 configured as the driving gear of the auxiliary drive primary reduction stage; a fourth gear 8 configured as the driven gear of the auxiliary drive primary reduction stage; an auxiliary drive motor 10; a second shaft gear hub 11; a fifth gear 12 configured as the driving gear of the auxiliary drive secondary reduction stage; a first-gear driven gear 13; a differential assembly 14; a left half-shaft 15; a first-gear driving gear 16; an output shaft 17; an output shaft gear hub 18; a second sleeve 19; a first shaft 20; and a second shaft 21.

As can be seen from Fig. 1, the electric drive axle comprises a main drive motor, an auxiliary drive motor, a reducer assembly and a differential assembly. The reducer assembly includes a main drive primary reduction stage, an auxiliary drive primary reduction stage, a first-gear transmission mechanism, a second-gear transmission mechanism and a shifting mechanism, wherein the shifting mechanism enables switching between first-gear position, second-gear position and neutral-gear position. The main drive motor transmits power to the differential assembly via the main drive primary reduction stage and through either the first-gear transmission mechanism or the second-gear transmission mechanism. The reducer assembly further includes an auxiliary drive disengagement device, and the auxiliary drive motor can transmit power to the first-gear transmission mechanism via the auxiliary drive primary reduction stage and through the engagement of the auxiliary drive disengagement device, while avoiding passive idling through the disengagement of the auxiliary drive disengagement device.

The main drive primary reduction stage, auxiliary drive primary reduction stage, first-gear transmission mechanism, second-gear transmission mechanism, shifting mechanism and auxiliary drive disengagement device are further described below.

The main drive primary reduction stage includes a first gear and a second gear that mesh with each other. The first gear, as the driving gear of the main drive primary reduction stage, is connected to the main drive motor. The second gear, as the driven gear of the main drive primary reduction stage, is fixed on the first shaft. The auxiliary drive primary reduction stage includes a third gear and a fourth gear that mesh with each other. The third gear, as the driving gear of the auxiliary drive primary reduction stage, is connected to the auxiliary drive motor. The fourth gear, as the driven gear of the auxiliary drive primary reduction stage, is rotatably supported on the second shaft (e.g., via bearings). Herein, the fourth gear does not mesh with the second-gear driven gear.

The first-gear transmission mechanism includes a first-gear driving gear and a first-gear driven gear. When the first-gear position is engaged, the first-gear driving gear serves as the driving gear of the main drive secondary reduction stage, and the first-gear driven gear serves as the driven gear of the main drive secondary reduction stage. The second-gear transmission mechanism includes a second-gear driving gear and a second-gear driven gear. When second gear is engaged, the second-gear driving gear serves as the driving gear of the main drive secondary reduction stage, and the second-gear driven gear serves as the driven gear of the main drive secondary reduction stage. In addition, the first-gear driving gear and the second-gear driving gear are fixed on the first shaft, and the first-gear driven gear and the second-gear driven gear are rotatably supported on the output shaft.

The shifting mechanism includes an output shaft gear hub, a first-gear driven gear hub, a second-gear driven gear hub and a first sleeve. The first sleeve can be located only on the output shaft gear hub (i.e., neutral-gear position), or connect the first-gear driven gear hub to the output shaft gear hub (engaging first-gear position), or connect the second-gear driven gear hub to the output shaft gear hub (engaging second-gear position). Thus, the power of the main drive motor can be transmitted to the output shaft through only a two-stage transmission, resulting in high transmission efficiency. Moreover, this design has good stability and space utilization.

The auxiliary drive disengagement device includes a fourth gear hub, a second shaft gear hub, a second shaft, a second sleeve, and a fifth gear. The second shaft gear hub is fixed on the second shaft, and the second sleeve can connect or disconnect the fourth gear hub and the second shaft gear hub. The fifth gear is fixed on the second shaft and meshes with the first-gear driven gear. Herein, the auxiliary drive disengagement device can not only transmit power to deliver the power of the auxiliary drive motor to the first-gear driven gear, but also disconnect the power of the auxiliary drive motor to avoid passive idling of the auxiliary drive motor.

With reference to Fig. 1, the output shaft is directly connected to the differential assembly without any reduction stage therebetween. The differential assembly is connected to the axles of the electric truck, i.e., the left half-shaft and the right half-shaft, wherein the right half-shaft passes through the output shaft designed as a hollow shaft. The left half-shaft and the right half-shaft are directly connected to the wheels respectively, that is, no reduction stage is provided between the left half-shaft and the wheel, and no reduction stage is provided between the right half-shaft and the wheel. In this overall design, the wheel-side reducer is particularly omitted, reducing manufacturing costs and assembly costs.

In addition, with reference to the driving direction, the main drive motor is arranged on the front side of the electric drive axle and the auxiliary drive motor is arranged on the rear side of the electric drive axle. Furthermore, the second gear is axially arranged between the first-gear driving gear and the second-gear driving gear. In addition, the fourth gear is axially arranged between the first-gear driven gear and the second-gear driven gear. Moreover, with reference to the radial direction of the axle, the auxiliary drive disengagement device is arranged between the shifting mechanism and the auxiliary drive motor. Through such a design, a more compact structure is realized.

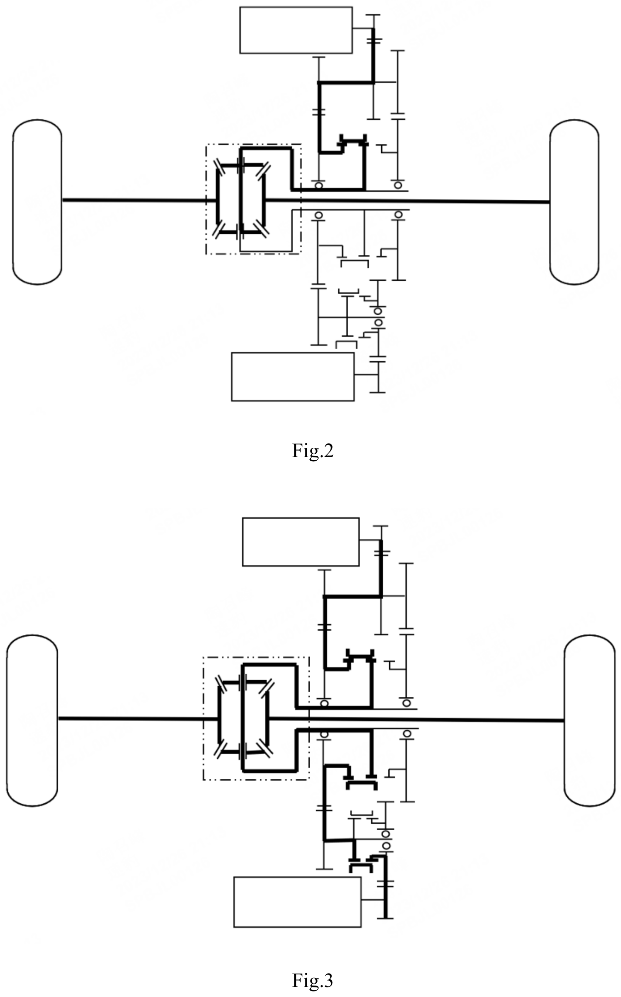

Various drive modes are described below with reference to Figures 2 to 7, where thick solid lines indicate the power transmission paths.

Fig. 2 shows the main drive motor low-gear drive mode. The first sleeve moves left (engaging first-gear position), and the second sleeve remains stationary (i.e., the auxiliary drive disengagement device is in the disengaged state). The power of the main drive motor is transmitted to the wheels via the first gear, second gear, first-gear driving gear, first-gear driven gear, output shaft gear hub, output shaft, differential, left half-shaft and right half-shaft. This ensures power performance under low-speed working conditions.

Fig. 3 shows the main drive motor and auxiliary drive motor low-gear drive mode. The first sleeve moves left, and the second sleeve moves right (i.e., the auxiliary drive disengagement device is in the engaged state). The power of the main drive motor is transmitted to the wheels via the first gear, second gear, first-gear driving gear, first-gear driven gear, output shaft gear hub, output shaft, differential, left half-shaft and right half-shaft; meanwhile, the power of the auxiliary drive motor is transmitted to the wheels via the third gear, fourth gear, second shaft gear hub, second shaft, fifth gear, first-gear driven gear, output shaft gear hub, output shaft, differential, left half-shaft and right half-shaft. This ensures high power demand at low speeds.

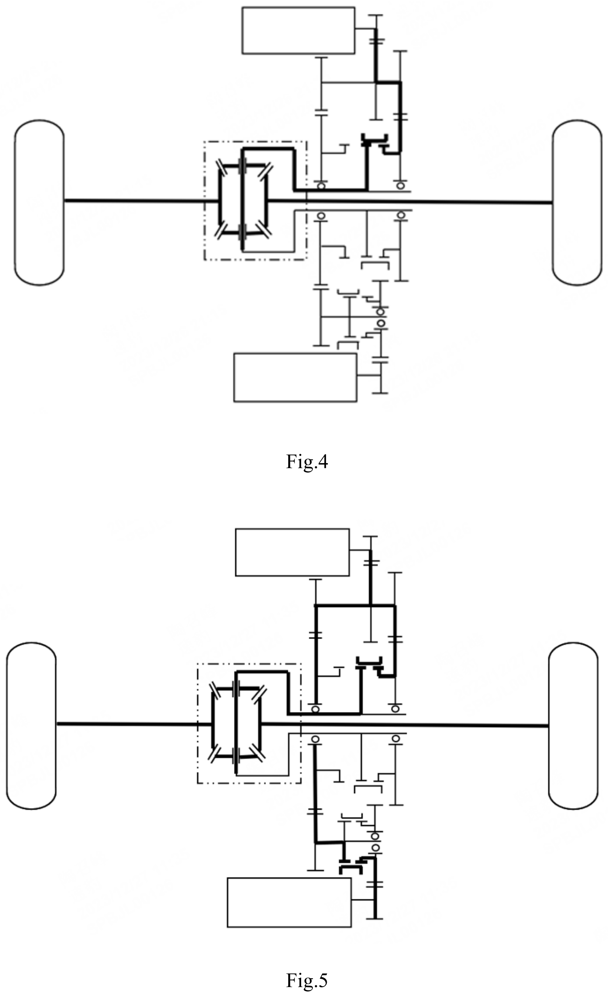

Fig. 4 shows the main drive motor high-gear drive mode. The first sleeve moves right (engaging second-gear position), and the second sleeve remains stationary (i.e., the auxiliary drive disengagement device is in the disengaged state). The power of the main drive motor is transmitted to the wheels via the first gear, second gear, second-gear driving gear, second-gear driven gear, output shaft gear hub, output shaft, differential, left half-shaft and right half-shaft. This mode realizes energy-saving requirements under light load, i.e., the auxiliary drive motor is completely disengaged without passive idling, reducing energy waste.

Fig. 5 shows the main drive motor and auxiliary drive motor high-gear drive mode. The first sleeve moves right (engaging second-gear position), and the second sleeve moves right (i.e., the auxiliary drive disengagement device is in the engaged state). The power of the main drive motor is transmitted to the wheels via the first gear, second gear, second-gear driving gear, second-gear driven gear, output shaft gear hub, output shaft, differential, left half-shaft and right half-shaft; meanwhile, the power of the auxiliary drive motor is transmitted to the wheels via the third gear, fourth gear, second shaft gear hub, second shaft, fifth gear, first-gear driven gear, first shaft, second-gear driving gear, second-gear driven gear, output shaft gear hub, output shaft, differential, left half-shaft and right half-shaft. This mode ensures high power demand at high speeds.

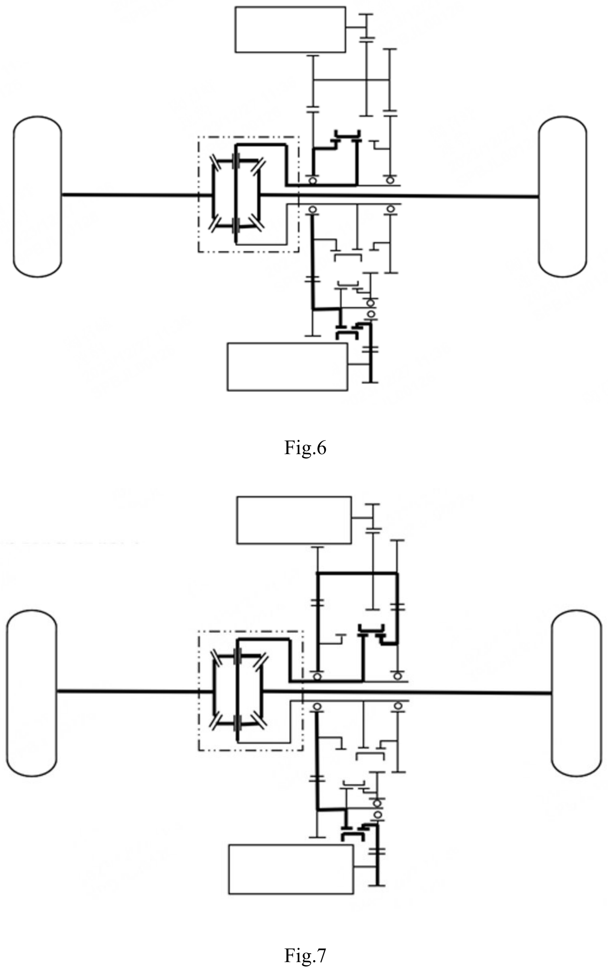

Fig. 6 shows the auxiliary drive motor low-gear drive mode. The first sleeve moves left (engaging first-gear position), and the second sleeve moves right (i.e., the auxiliary drive disengagement device is in the engaged state). The main drive motor is shut down, and the power of the auxiliary drive motor is transmitted to the wheels via the third gear, fourth gear, second shaft gear hub, second shaft, fifth gear, first-gear driven gear, output shaft gear hub, output shaft, differential, left half-shaft and right half-shaft. This mode realizes energy-saving requirements under light load or no-load and low-speed conditions.

Fig. 7 shows the auxiliary drive motor high-gear drive mode. The first sleeve moves right (engaging second-gear position), and the second sleeve moves right (i.e., the auxiliary drive disengagement device is in the engaged state). The main drive motor is shut down, and the power of the auxiliary drive motor is transmitted to the wheels via the third gear, fourth gear, second shaft gear hub, second shaft, fifth gear, first-gear driven gear, first-gear driving gear, first shaft, second-gear driving gear, second-gear driven gear, output shaft gear hub, output shaft, differential, left half-shaft and right half-shaft. This mode realizes energy-saving requirements under light load or no-load and high-speed conditions. In the above two drive modes, although passive idling of the main drive motor may occur due to gear transmission, no separate power disengagement device is provided here. This is because, considering various working conditions, the impact of passive idling of the main drive motor is small, and it is not necessary to provide a separate power disengagement device from the cost perspective. Therefore, the above design is very reasonable overall.

It should be understood by those skilled in the art that the above specific embodiments are examples rather than limitations. Various modifications, combinations, partial combinations and substitutions can be made to the embodiments of the present invention according to design requirements and other factors, as long as they fall within the scope of the appended claims or their equivalents, i.e., within the protection scope of the present invention.

## Claims

1. An electric drive axle for an electric truck, comprising a main drive motor, an auxiliary drive motor, a reducer assembly and a differential assembly, **characterized in that** the reducer assembly includes a main drive primary reduction stage, an auxiliary drive primary reduction stage, a first-gear transmission mechanism, a second-gear transmission mechanism and a shifting mechanism, wherein the shifting mechanism enables switching between first-gear position, second-gear position and neutral-gear position; wherein the main drive motor transmits power to the differential assembly via the main drive primary reduction stage and through either the first-gear transmission mechanism or the second-gear transmission mechanism; and wherein the reducer assembly further includes an auxiliary drive disengagement device, wherein the auxiliary drive motor is capable of transmitting power to the first-gear transmission mechanism via the auxiliary drive primary reduction stage and through the engagement of the auxiliary drive disengagement device, and avoiding passive idling through the disengagement of the auxiliary drive disengagement device.

2. The electric drive axle according to claim 1, **characterized in that** the main drive primary reduction stage includes a first gear and a second gear that mesh with each other, the first gear is connected to the main drive motor, and the second gear is fixed on a first shaft; wherein the auxiliary drive primary reduction stage includes a third gear and a fourth gear that mesh with each other, the third gear is connected to the auxiliary drive motor, and the fourth gear is rotatably supported on a second shaft; wherein the first-gear transmission mechanism includes a first-gear driving gear and a first-gear driven gear, and the second-gear transmission mechanism includes a second-gear driving gear and a second-gear driven gear; wherein the first-gear driving gear and the second-gear driving gear are fixed on the first shaft, and the first-gear driven gear and the second-gear driven gear are rotatably supported on the output shaft of the transmission assembly; and wherein the shifting mechanism includes an output shaft gear hub, a first-gear driven gear hub, a second-gear driven gear hub and a first sleeve, the first sleeve being capable of being located only on the output shaft gear hub, or connecting the first-gear driven gear hub to the output shaft gear hub, or connecting the second-gear driven gear hub to the output shaft gear hub.

3. The electric drive axle according to claim 2, **characterized in that** the auxiliary drive disengagement device includes a fourth gear hub, a second shaft gear hub, a second shaft, a second sleeve and a fifth gear, the second shaft gear hub is fixed on the second shaft, the second sleeve is capable of connecting or disconnecting the fourth gear hub and the second shaft gear hub, and the fifth gear is fixed on the second shaft and meshes with the first-gear driven gear.

4. The electric drive axle according to claim 2, **characterized in that** the output shaft is directly connected to the differential assembly, the differential assembly is connected to the left half-shaft and the right half-shaft of the electric truck, the right half-shaft passes through the output shaft designed as a hollow shaft, and the left half-shaft and the right half-shaft are respectively directly connected to the corresponding wheels.

5. The electric drive axle according to claim 3, **characterized in that** the second gear is axially arranged between the first-gear driving gear and the second-gear driving gear; wherein the fourth gear is axially arranged between the first-gear driven gear and the second-gear driven gear; wherein, with reference to the radial direction of the axle, the auxiliary drive disengagement device is arranged between the shifting mechanism and the auxiliary drive motor; and wherein, with reference to the driving direction, the main drive motor is arranged on the front side of the electric drive axle and the auxiliary drive motor is arranged on the rear side of the electric drive axle.

6. The electric drive axle according to claim 1, **characterized in that** the rated torque of the main drive motor is greater than 1000 Nm, and the rated torque of the auxiliary drive motor does not exceed the rated torque of the main drive motor.

7. The electric drive axle according to claim 1, **characterized in that** the main drive motor, the auxiliary drive motor, the reducer assembly and the differential assembly are arranged in a common housing.

8. The electric drive axle according to claim 1, **characterized in that** the electric drive axle is provided with a controller for controlling the shifting mechanism and the auxiliary drive disengagement device, the controller being configured to implement the following drive modes: main drive motor low-gear drive mode, main drive motor and auxiliary drive motor low-gear drive mode, main drive motor high-gear drive mode, main drive motor and auxiliary drive motor high-gear drive mode, auxiliary drive motor low-gear drive mode, and auxiliary drive motor high-gear drive mode.

9. The electric drive axle according to claim 8, **characterized in that** in the auxiliary drive motor low-gear drive mode, the main drive motor outputs zero torque and the shifting mechanism engages first-gear position, and the auxiliary drive motor is capable of transmitting power to the first-gear transmission mechanism through the engagement of the auxiliary drive disengagement device and then outputting power through the first-gear transmission mechanism; in the auxiliary drive motor high-gear drive mode, the main drive motor outputs zero torque and the shifting mechanism engages second-gear position, and the auxiliary drive motor is capable of transmitting power to the first-gear transmission mechanism through the engagement of the auxiliary drive disengagement device and then transmitting it to the second-gear transmission mechanism to output power; and when the auxiliary drive motor is used alone, the cruise speed of the electric truck is between 20 and 50 km/h.

10. An electric truck, **characterized in that** the electric truck comprises the electric drive axle according to any one of claims 1 to 9.
